# EUROPÄISCHE PATENTSCHRIFT

(11) **EP 0 639 590 B1**
(45) Veröffentlichungstag und Bekanntmachung des Hinweises auf die Patenterteilung: **26.02.1997**
(21) Anmeldenummer: 94112188.1
(22) Anmeldetag: 04.08.1994
(51) Int. Cl.: C08F 20/14, C08F 287/00, C08L 33/06, C09D 133/06

(54) **Verfahren zur Herstellung monodisperser Poly(meth)acrylat- Teilchen**
Process for preparing monodispersed poly (meth)acrylate particles
Procédé de préparation de particules monodispersées de poly(meth)acrylate

(30) Priorität: 16.08.1993 DE 4327464
(43) Veröffentlichungstag der Anmeldung: 22.02.1995
(73) Patentinhaber: Röhm GmbH, 64293 Darmstadt (DE)
(72) Erfinder: Siol, Werner, Dr., D-64297 Darmstadt (DE); Wopker, Wilhelm, D-64404 Bickenbach (DE); Felger, Erwin, D-64295 Darmstadt (DE); Parusel, Markus, D-64409 Messel (DE)

(56) Entgegenhaltungen:
- EP-A- 0 030 440

## Beschreibung

### Gebiet der Erfindung

Die Erfindung betrifft ein Verfahren zur Herstellung monodisperser, formstabiler Poly(meth)acrylat-Teilchen mit einem Durchmesser von 2 - 20 µm.

### Stand der Technik

Die Praxis verzeichnet einen steigenden Bedarf an Kunststoffen in Form von formstabilen Kunststoff-Teilchen mit einer definierten, einheitlichen Teilchengröße im Bereich von 2 - 20 µm. Derartige Teilchen finden z.B. Anwendung als Abstandshalter (Displays, Folien), als Oberflächenmodifizierungsmittel oder als Trägermaterial in der Diagnostik.
Das Hauptinteresse besteht aber im Bereich der optischen Industrie, die speziell mit Teilchen in diesem Größenbereich bei exakt einstellbarem Brechungsunterschied zu einer gegebenen Polymermatrix die unterschiedlichen Lichteffekte realisieren kann.
Dabei ist das Anforderungsprofil an derartige Teilchen mit Durchmesser 5 - 15 µm seit langem bekannt: es fehlt nur an einem praktikablen Verfahren zur Herstellung solcher Teilchen. So versagt die klassische Methode zur Herstellung definierter Teilchen, die Emulsionspolymerisation, in diesem Teilchengrößenbereich (vgl. Ullmanns Encyclopdia of Industrial Chemistry, 5th. Ed. Vol. A21, pp. 168, 373 - 387 VCH 1992; Becker-Braun, Kunststoff-Handbuch, Bd. 1., S. 26 - 28 Carl Hanser 1990).

Auf dem Wege der Emulsionspolymerisation lassen sich in der Regel nur Teilchen mit einem Durchmesser ≤ 2 µm problemlos herstellen. Die Bemühungen größere Teilchen herzustellen, führen im allgemeinen zu Teilchenneubildungen, also multimodalen Teilchengrößenverteilungen. Gemäß Literaturangaben soll es gelingen, durch mehrfaches Anquellenlassen von wäßrigen Dispersionen mit Monomeren Teilchen der genannten Größe herzustellen [Vgl. Ugelstad, J., Mork, P.C., Kaggurud, K.H. Ellingsen, T., and Berge, A., Adv. Colloid Interface Sci. 13, 191 (1980)].

Das angegebene Verfahren ist jedoch äußerst kompliziert. Ein weiteres Verfahren zur Herstellung dieser Teilchen in einer Umgebung mit Mikrogravitation (Durchführung in Space-Shuttle unter Weltraumbedingungen) verspricht kaum eine industrielle Anwendung (vgl. Vanderhoff, J.W., El-Asser, M.S., Micale, F.J., Sudol, E.D., Tseng, C.M., Silwanowicz, A., Sheu, H.R., and Kornfeld, D.M., Polym. Mater, Sci. Eng. Prepr. 54, 587 (1986). Somit bleibt nur die Feststellung übrig, daß bislang keine einfache, industriell anwendbare Methode existiert, derartige Teilchen in Wasser als Reaktionsmedium herzustellen. Auch die klassische Suspensionspolymerisation, bei der bekanntlich die Teilchendurchmesser primär durch die Rührgeschwindigkeit gesteuert werden, kommt im allgemeinen nicht in die Größenordnung von 5 - 15 µm. Darüber hinaus sind diese Teilchen nicht monodispers, sondern fallen in breiter Verteilung an.

Hauptanwendung dieser Teilchen sind vor allem Lichtstreuungsanwendungen, wobei der Brechnungsindex der Teilchen von Belang ist (vgl. JP-A-03 126 766; Chem. Abstr. 115, 209 446n). Häufig eingesetzt für z.B. mattierende Beschichtungen werden auch Kern-Schale-Teilchen dieser Größenordnung (JP-A-03 58 840; Chem. Abstr. 115, 116 478; EP-A-342 283).
Wesentlich günstiger sind die Möglichkeiten, monodisperse PMMA-Teilchen mit einem Durchmesser von 2 - 20 µm zu gewinnen, wenn man die Teilchen nach dem Prinzip der Fällungspolymerisation im organischen Medium unter Einsatz eines organischen Verteilers herstellt.
Dementsprechend groß ist die Zahl von Veröffentlichungen zu diesem Thema. Die Fällungspolymerisation von PMMA in Kohlenwasserstoffen als Lösemittel wurde bereits in den Dreißigerjahren vorgeschlagen (US-A-2 135 443, DE-C-662 157). Über hundert Schutzrechte und zahlreiche sonstige Literaturstellen haben sich seither mit der Polymerisation von Alkyl(meth)acrylaten in nicht-wäßrigen Dispersionen beschäftigt.
In vielen der einschlägigen Schutzrechte werden reine Lackanwendungen beschrieben: stabile, sehr feinteilige organische Dispersionen. Darüber hinaus gibt es auch Arbeiten, die den Einfluß der Emulgatoren, der Initiatoren und der Lösemittelgüte auf die Teilchengröße untersuchen. Eine sehr informative Zusammenfassung der Dispersionspolymerisation von Methylmethacrylat in nichtwäßrigen Medien wird in Winnig M.A., et al; Makromol. Chem. Macromol. Symp. 10/11, 483 - 501 (1987) gegeben.

Als Emulgatoren für die Dispersionspolymerisation werden vor allem Blockcopolymere eingesetzt. Einen Überblick über gängige Polymerisationsbedingungen wird in Winnik M.A. et al., loc.cit. Table 1, S. 485 gegeben.

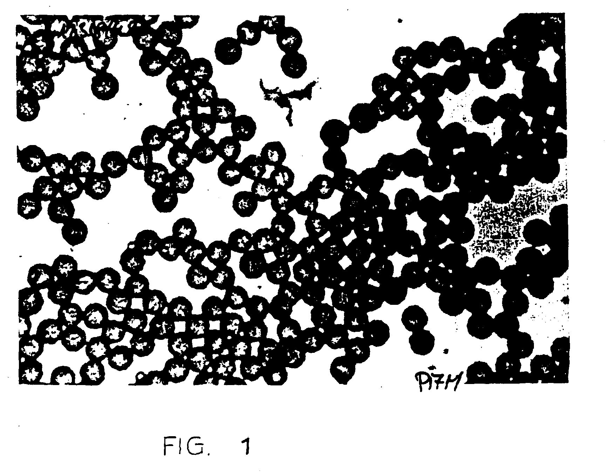

Wie aus dieser Arbeit ferner hervorgeht, läßt sich die Teilchengröße über die Konzentration des Emulgatores (Fig. 1) die Initiatorkonzentration (Fig.5) sowie über den Feststoffgehalt (Fig. 3) und die Lösemittelgüte (Fig. 4) steuern. Die dortigen Abbildungen lassen erkennen, daß eine Steuerung zu großen Teilchen (> 3 µm) vor allem mit Tetrachlorkohlenstoff/Alkan-Mischungen möglich ist. Ohne Zusatz von Halogen-Kohlenwasserstoffen findet man dagegen Bereiche, in denen eine Teilchengrößensteuerung überhaupt nicht möglich ist. Hier erhält man Koagulation.

### Aufgabe und Lösung

Die Verwendung halogenierter Kohlenwasserstoffe im gewerblichen Bereich kann aus oekologischen und toxikologischen Gründen heutzutage nicht mehr gerechtfertigt werden. Es bestand andererseits weiterhin die eingangs erwähnte Aufgabe, in gut steuerbarer Weise monodisperse Poly(meth)acrylat-Partikel, vorzugsweise im Teilchengrößenbereich 1 - 20 µm zur Verfügung zu stellen. Diese Aufgabe wird durch das erfindungsgemäße Verfahren, das sich einer spezifischen Rezeptur bedient, in hervorragender Weise gelöst.
Die Erfindung betrifft somit ein Verfahren zur Herstellung monodisperser Poly(meth)acrylate nach dem Verfahren der Fällungspolymerisation, wobei man die Monomeren M enthaltend zu mindestens 60 Gew.-% Monomere der Formel I 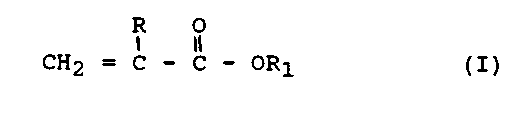 worin R Wasserstoff oder Methyl und R₁ einen Alkylrest mit 1 bis 8 Kohlenstoffatomen, einen gegebenenfalls mit C₁ bis C₈-Alkyl-substuierten Aryl-, insbesondere Phenyl- oder einen Aralkyl- mit 6 bis 24 C-Atomen, insbesondere einen Benzylrest bedeutet, in einem Lösungsmittel L, das zu mindestens 70 Gew.-% und bis zu 100 Gew.-% aus Cyclohexan besteht, in
Gegenwart eines Blockcopolymeren mit Polystyrolanteilen BCP in Anteilen von 0,1 bis 10 Gew.-% bezogen auf die Monomeren und in Anwesenheit eines Perkohlensäureesters als Initiator in Anteilen von 0,02 bis 2 Gew.-% bezogen auf die Monomeren, polymerisiert. Die erfindungsgemäß gewonnenen Poly(meth)acrylat-Partikel liegen in der Regel völlig im Teilchengrößenbereich von 1 - 20 µm (wobei als Maß der Teilchengröße der Durchmesser in der Ebene der größten Erstreckung dienen soll). Die Bestimmung geschieht lichtmikroskopisch.
Die Verfahrensprodukte weisen im Gegensatz zu klassischen Perlpolymerisaten eine recht einheitliche Teilchengrößenverteilung auf. Im Zusammenhang mit der vorliegenden Erfindung werden sie daher als **monodispers** bezeichnet. Darunter sei zu verstehen, daß die Teilchen zu mindestens 80 Gew.-%, vorzugsweise 90 Gew.-% der Teilchen innerhalb eines Größenbereichs von ± 20 % vom angegebenen Mittelwert liegen. Gelegentlich können auch geringere Anteile (< 5 Gew.-%) feiner Teilchen gebildet werden, die jedoch anwendungstechnisch völlig ohne Belang sind.
Die erfindungsgemäß eingesetzten Lösungsmittel L sind halogenfrei.
Die Blockcopolymeren mit Polystyrolanteilen BCP sind vorzugsweise ausgewählt aus der Gruppe, aufgebaut aus einem Polystyrol und einem Ethylen-co-propylen-Block (= hydriertes Polyisopren) oder aus einem Polystyrol und einem Ethylen-co-butylen-Block (= hydriertes Polybutadien).
Der Anteil des Polystyrolblocks zu dem anderen Blockcopolymeranteil in BCP liegt in der Regel bei 20 bis 50 Gew.-%.
Die Blockcopolymeren BCP besitzen im allgemeinen ein Molekulargewicht im Bereich M_{w} = 30 000 - 200 000, bevorzugt 70 000 - 130 000 Dalton. (Vgl. H.F. Mark et al., Encyclopedia of Polymer Science & Engineering Vol. 10, 1 - 19, J. Wiley, 1987)
Unter den Monomeren der Formel I seien in erster Linie das Methylmethacrylat, vorzugsweise in Anteilen von mindestens 20 und bis zu 100 Gew.-% bezogen auf die Mononeren M, ggfls. zusammen mit anderen Monomeren, insbesondere mit Methylacrylat, Ethyl(meth)acrylat, Butylacrylat, Isobutylmethacrylat, 2-Ethylhexyl(meth)-acrylat in Mengen bis zu 20 Gew.-Teilen verstanden.
Im allgemeinen sind unter den Mononeren der Formel I solche mit R = CH₃, also Methacrylate, bevorzugt.

Zur Erhöhung des Brechungsindex werden bevorzugt Aryl-bzw. Aralkyl(meth)acrylate mit 6 bis 14 Kohlenstoffatomen im Esterteil, insbesondere Phenyl-, Tolyl-, Naphthyl-, Benzyl-, Phenethyl(meth)acrylate in Anteilen von 1 - 80 Gew.-% eingesetzt. Der Anteil an Vinylaromaten wie Styrol und seinen Homologen wird zweckmäßig auf < 20 Gew.-% bezogen auf M zu begrenzen sein, da diese Monomere den Polymerisationsverlauf erheblich stören.
Durch die Mitverwendung hydrophiler Monomerer läßt sich die Teilchengröße in Richtung Teilchenverkleinerung steuern. Als derartige hydrophile Monomere kommen z.B. Methacylsäurehydroxy- bzw. ggfls. alkylsubstituierte Aminoalkylester der (Meth)acrylsäure mit C₁- bis C₁₂-Alkylresten sowie entsprechende Amide infrage.

Hydrophobe Comonomere wie z.B. die oben genannten Isobutylmethacrylat, Phenylmethacrylat, Benzylmethacrylat, die in Mengen von 0 bis ca. 70 Gew.-% bezogen auf die Monomeren M eingesetzt werden können, steuern die Teilchengröße in Richtung Teilchenvergrößerung.

Desweiteren können die Teilchen durch Mitverwendung von Pfropfvernetzern, d.h. Monomeren mit zwei radikalisch polymerisierbaren Gruppen verschiedener Reaktivität wie z.B. Allyl(meth)acrylat, in Anteilen von 0,1 bis 20 Gew.-Teilen bezogen auf die Monomeren vernetzt werden. Die Verwendung von vernetzenden Monomeren mit gleichartigen polymerisationsfähigen Einheiten, z.B.
(Meth)acrylsäureester von mehrwertigen Alkoholen ist dagegen auf < 1 Gew.-Teil bezogen auf die Monomeren zu beschränken.
Als Lösungsmittelkomponente im Lösungsmittel bzw. Lösungsmittelgemisch L kommen kleinere Anteile (≤ 30 Gew.-%) anderer Lösungsmittel, beispielsweise polarer Lösungsmittel wie Butylacetat, infrage.
Die erfindungsgemäß als Initiatoren vorgesehenen Perkohlensäureester sind bekannt, beispielsweise kommt insbesondere das Bis-(4-tert.Butylcyclohexyl)peroxydicarbonat, daneben das Dicyclohexylperoydicarbonat (unter dem Warenzeichen INTEROX BCHPC bzw. INTEROX CHPC 1652 der Fa. Peroxidchemie erhältlich) oder das Diisopropylperoxy-dicarbonat infrage. (Vgl. Brandrup-Immergut, Polymer Handbook 3rd. Ed. II-1, J. Wiley 1989). Die Styrol-Blockcopolymeren BCP enthalten bevorzugt von 30 bis zu 50 Gew.-% Polystyrolblöcke neben den aus der Hydrierung von Polyisopren bzw. Polybutadien hervorgegangenen Propylen- bzw. Butylen-Einheiten.

Genannt seien beispielsweise die hydrierten Styrol-Isopren-Blockcopolymerisate vom Typ SHELLVIS® 50 der Fa. Shell.

### Durchführung des Verfahrens

Die Polymerisation kann in einem für die Fällungspolymerisation geeigneten Reaktor bei kleineren Ansätzen beispielsweise einem 500 ml Dreihalskolben ausgestattet mit Kühler, Schutzgaseinleitungsvorrichtung, Thermometer und Rührer durchgeführt werden. Zweckmäßig wird unter einem Schutzgas wie z.B. Argon gearbeitet. Vorteilhafterweise gibt man in dem Reaktor das Lösungsmittel L das bzw. die Monomeren, insbesondere der Formel I und Emulgator als Lösung vor. Als Anhalt seien beispielsweise 150 Gew.-Teile Lösungsmittel L, berechnet auf die Monomeren, genannt. Vorzugsweise verwendet man reines Cyclohexan. Anschließend erwärmt man beispielsweise auf 60 Grad C. Wenn die gewählte Innentemperatur erreicht ist, startet man unter Rühren die Polymerisation durch Zugabe des Initiators, vorzugsweise gelöst in wenig Cyclohexan.
Gewöhnlich steigt die Temperatur bereits nach kurzer Zeit, beispielsweise nach einer Minute, wobei sich die bis anhin klare Lösung trübt. Nach ca. 5 Minuten erscheint der Ansatz in der Regel bereits weiß. Unter den geschilderten Voraussetzungen kann nach ca. 20 Minuten mit einem Anstieg der Innentemperatur auf ca. 81 Grad C gerechnet werden, wobei die Innentemperatur infolge Siedekühlung einige Minuten bei dieser Temperatur stehen bleiben kann.
Als typische Fällungspolymerisation verläuft die Polymerisation recht schnell, so daß auf eine gute Kühlung und Rührung geachtet werden muß. Zur Nachreaktion hält man noch über eine gewisse Zeit beispielsweise ca. 1 Stunde unter Rühren bei ca. 80 Grad C und läßt dann unter Rühren auf Raumtemperatur abkühlen.
Die so erhaltenen Dispersionen sind nahezu völlig koagulatfrei. Man erhält monodisperse Polymerisatpartikel im angegebenen Größenbereich (Durchmesser 1 - 20 µm).

Neben reinen Polymethacrylat-Teilchen (siehe Beispiel 1) und unvernetzten Copolymer-Teilchen (siehe Beispiele 9 - 11) können mit diesen Verfahren bevorzugt vernetzte Teilchen erzeugt werden, wobei, wie oben ausgeführt, Allylmethacrylat als Vernetzer bevorzugt ist.

Von Interesse sind vernetzte, homogene Teilchen aus 90 - 99,5 Gew.-% MMA und 10 - 0,5 Gw.-% Allylmethacrylat in einem Teilchengrößenbereich von 4,0 - 10,0 µm.

Bevorzugt sind auch vernetzte Teilchen, aufgebaut aus 0,5 - 10 Gew.-% Allylmethacrylat, 10 - 50 Gew.-% Phenylmethacrylat und 40 - 89,5 Gew.-% Methylmethacrylat sowie 0 - 20 Gew.-% weiterer Methacrylsäureester.

Ganz besonderes Interesse gilt vernetzten Teilchen der Zusammensetzung

| | |
|---|---|
| 30 - 80 Gew.-% | Methylmethacrylat |
| 60 - 19,5 Gew.-% | Benzylmethacrylat und |
| 10 - 0,5 Gew.-% | Allylmethacrylat |

mit einer Teilchengröße von 4 - 12 µm, bevorzugt 5 - 11 µm und ganz besonders bevorzugt mit einer Teilchengröße von 7,5 ± 2 µm.

Der besonders bevorzugte Gehalt and Allylmethacrylat liegt im Bereich 3 - 7 % ganz besonders bevorzugt im Bereich 4 - 6 Gew.-% Gegebenenfalls kann das Benzylmethacrylat gänzlich oder teilweise durch Phenylpropylmethacrylat oder durch Phenylethylmethacrylat ersetzt sein. Auch das Methylmethacrylat kann in Anteilen bis etwa 10 Gew.-% durch andere (Meth)acrylsäureester, z.B. Isobutylmethacrylat, ersetzt sein.
Dabei sind sowohl Teilchen mit einer glatten Oberfläche von Interesse, unter anwendungstechnischen Gesichtspunkten von besonderem Interesse sind jedoch Teilchen mit einer rauhen Oberfläche.
Besonders bevorzugt sind vor allem runde, vernetzte Teilchen mit rauher Oberfläche in einen Teilchengrößenbereich von 5,5 - 9,5 µm, die aufgebaut sind aus etwa 55 Gew.-% Methylmethacrylat, 40 Gew.-% Benzylmethacrylat und 5 Gew.-% Allylmethacrylat. Besonders bevorzugt sind solche Teilchen, die durch das gesamte Teilchen relativ homogen die oben genannte Copolymerisatzusammensetzung aus Methylmethacrylat, Benzylmethacrylat und Allylmethacrylat aufweisen, also Teilchen, die einen Kern-Schale-Aufbau besitzen. Derartige Teilchen mit rauher Oberfläche im Bereich von 4 - 12 µm, insbesondere Teilchen der Größe 7,5 ± 2 µm und der oben genannten Polymerzusammensetzung aus MMA, Benzylmethacrylat und Allylmethacrylat eignen sich in hervorragender Weise zur Einarbeitung in Formmassen.

Generell lassen sich nach den genannten Verfahren sehr gut Teilchen mit einem Brechungsindex im Bereich von 1,48 - 1,58 und einer Teilchengröße von 4 - 12 µm herstellen.
Bevorzugt sind jedoch vernetzte Teilchen mit einem Brechungsindex n_{D}²⁰ im Bereich 1,500 - 1,550 und einer Teilchengröße von 7,5 ± 2 µm, wobei Teilchen mit einem Brechungsindex im Bereich 1,510 - 1,530 besonders bevorzugt sind.
Ganz besonders bevorzugt sind - wie oben dargestellt - Teilchen der Zusammensetzung MMA, Benzylmethacrylat, Allylmethacrylat mit einer rauhen Oberfläche, wobei die Oberflächenrauhigkeit der Teilchen dergestalt ist, daß sie unter einem Lichtmikroskop mit beispielsweise etwa 500-facher Vergrößerung deutlich erkennbar ist.

Derartige Teilchen, insbesondere solche Teilchen mit rauher Oberfläche mit einem Teilchendurchmesser von 4 - 12 µm, inbesondere mit einem Durchmesser von 7,5 ± 2 µm lassen sich besonders gut in Anteilen von 0,01 - 60 Gew.%, bevorzugt in Anteilen von 0,1 - 25 Gew.-% in Formmassen einarbeiten.
Dabei kommen alle thermoplastisch verarbeitbaren Formmassen in Frage, insbesondere jedoch amorphe, glasklare, gegebenenfalls auch eingefärbte thermoplastische Formmassen des Typs Polymethacrylat, Polymethacrylat-Styrol-Copolymere, Polymethacrylat-Styrol-Maleinsäureanhydrid-Copolymere, Polymethacylimide, Polycarbonate (hier insbesondere Bisphenol-A-Polycarbonat) sowie Polystyrol, SAN und PVC in Frage. Von besonderem Interesse sind Formmassen auf Basis PMMA und Polycarbonat.
Die Formmassen können als solche oder auch schlagzäh modifiziert zum Einsatz kommen.

Neben dem Einsatz der erfindungsgemäßen Teilchen in Formmassen kommt auch der Einsatz der Teilchen in Gießharzen zur Anwendung. Auch die Einarbeitung der Teilchen z.B. in Anteilen von 0,01 - 30 Gew.-% in Lacke und hier insbesondere in UV-härtbare Reaktiv-Lacken ist bevorzugt.

Beim Einsatz der monodispersen Teilchen in Formmassen kommen entweder Konzentrate (Masterbatches) oder direkt Trockenmischungen zum Einsatz. Formmassen, bzw.
Trockenmischungen, die diese Teilchen enthalten, können durch die bekannten thermoplastischen Verarbeitungsverfahren verarbeitet werden, so z.B. durch Extrudieren, Spritzgießen, Spritzblasen, Extrusionsblasen, Coextrudieren.
Der vorteilhafte Einsatz dieser monodispersen Perlpolymerisate dient zum einen der reinen Oberflächenveredelung von Formkörpern, insbesondere lassen sich jedoch besondere optische Effekte durch Einarbeitung dieser Teilchen in die Formmasse oder Coextrusionsmasse und Lacke erzielen.
Bevorzugt hergestellt werden mit Formmassen, die diese monodispersen Teilchen enthalten, Rückprojektionswände, TV-Screens (Diaprojektionswände, Bilderzeugung ganz allgemein), Projektionswände, Monitorabdeckungen, Skalenabdeckungen, Leuchtenabdeckungen und auch Streulinsen.
Daneben können auch Raumtrennwände mit Formmasse, die diese Perlen enthalten, hergestellt werden. Dabei stellen die genannten Anwendungen nur einen kleinen Teil der Einsatzmöglichkeiten für Formmassen mit diesen monodispersen Teilchen mit - im bevorzugten Fall - rauher Oberfläche dar.

Die folgenden Beispiele dienen zur Erläuterung der Erfindung. Die Bestimmung der Teilchengröße geschieht mittels Lichtmikroskop.

### BEISPIELE

### Beispiel 1

In einem Dreihalskolben (500 ml) ausgestattet mit Kühler, Argon-Einleitung, Thermometer und Rührer werden
- 150 g: Cyclohexan
- 100 g: Methylmethacrylat
- 0,625 g: Styrol-Isopren-Blockcopolymerisat hydriert, aus 40 Gew.-Teilen Styrol,
60 Gew.-Teilen Isopren,
Uneinheitlichkeit U = ca. 0,04 (= 0,63 Gew.-% Emulgator) (Produkt SHELLVIS® 50 der Shell International Chemical Company, London).
gelöst und auf 60 Grad C erwärmt.
Wenn die Innentemperatur 60 Grad C erreicht hat, wird durch Zugabe von 1 g Bis(4-tert.-Butylcyclohexyl)peroxydicarbonat (gelöst in wenig Cyclohexan) die Polymerisation ausgelöst. Bereits nach 1 Minute steigt die Temperatur auf 61 Grad C. Die vorher klare Lösung wird deutlich trüb; nach 5 Minuten ist der Ansatz bereits weiß. Nach 20 Minuten ist die Innentemperatur auf 81 Grad C gestiegen. Bei ca. 81 Grad C bleibt die Innentemperatur einige Minuten konstant (Siedekühlung). Zur Nachreaktion wird noch 1 Stunde bei 80 Grad C gerührt. Anschließend wird unter Rühren abgekühlt.

Die gebildete Dispersion ist fast völlig koagulatfrei; die erhaltenen Teilchen sind monodispers. Mittlerer Teilchendurchmesser: 4,5 µm.
Aus der Dispersion wird der Feststoff durch Abfiltrieren oder durch Sedimentation, Dekantieren und nachfolgendes Trocknen gewonnen.

### Beispiel 2

Herstellung von vernetzten Polymethacrylat-Teilchen mit erhöhtem Brechungsindex.
In einem 250 ml-Reaktor ausgestattet mit Kühler, N₂-Einleitung, Temperaturfühler, Thermostat und Rührer werden
- 129,55 g: Cyclohexan
- 41,16 g: Methylmethacrylat
- 27,90 g: Benzylmethacrylat
- 0,70 g: Allylmethacrylat
- 0,43 g: Styrol-Isopren-Blockcopolymerisat,
hydriert (SHELLVIS® 50) vorgelegt

### Initiatorlösung:

- 0,70 g: Bis(4-tert.-Butylcyclohexyl)peroxydicarbonat in 6,3 g Cyclohexan gelöst

Der Reaktor wird mit Stickstoff gespült. Die Reaktion erfolgt unter Stickstoff. Das hydrierte Styrol-Isopren-Blockcopolymerisat, die Monomeren und das Cyclohexan werden im Reaktor vorgelegt. Das Bad wird auf ca. 65 Grad C aufgeheizt. Nachdem die Innentemperatur 65 Grad C erreicht hat, wird die Reaktion durch Zugabe der Initiatorlösung gestartet. Nach 75 Minuten erfolgt Zugabe von 0,1 Gew.-% tert.-Butylper-2-ethylhexanoat (bezogen auf die Monomeren) zum Nachvernetzen. Die Dispersion wird noch 2,5 Stunden bei erhöhter Temperatur nachgerührt, dann abgekühlt und abgelassen.
Die Dispersion ist koagulatfrei; die erhaltenen Teilchen sind monodispers bei einer Teilchengröße von 7 - 6,5 µm.
FIG. 1 stellt die Teilchen bei einer Vergrößerung von ca. 1 : 1000 dar.

### Beispiele 3 - 12

Analog Beispiel 2 werden auch die in den Tabellen 1 und 2 wiedergegebenen Beispiele 3 - 12 durchgeführt.

**TABELLE 1**

| | | | | | |
|---|---|---|---|---|---|
| Dispersion aus Methylmethacrylat-Allylmethacrylat- Copolymerisat (99 : 1 Gew.-Teile) mit Bis(4-tert.- Butylcyclohexyl)peroxydicarbonat als Initiator, Feststoffgehalt 30 %. | | | | | |

| *Beisp.* | **Initiator (%)* | **Styrol-Isopren Blockcopolymerisat, hydriert (%)* | *Cyclohexan (%)* | *Butylacetat (%)* | *Teilchengröße (µm)* |
|---|---|---|---|---|---|
| *3* | *0,25* | *0,63* | *100* | *0* | *3,0* |
| *4* | *0,25* | *0,63* | *91,4* | *8,6* | *4,1* |
| *5* | *0,25* | *0,63* | *88,4* | *11,6* | *4,6* |
| *6* | *0,25* | *0,63* | *85,9* | *14,1* | *4,8* |
| *7* | *0,25* | *0,63* | *82,9* | *17,1* | *5,3* |
| *8* | *0,25* | *0,63* | *79,9* | *20,1* | *6,4* |

| | | | | | |
|---|---|---|---|---|---|
| * *Gew.-% bezogen auf Monomere* | | | | | |

Wie zu sehen ist, werden mit steigendem Zusatz von Butylacetat zum Cyclohexan die Teilchen größer. Vergleicht man Beispiel 11 mit Beispiel 4, so sieht man, daß durch Mitverwendung eines hydrophoben Monomeren (Isobutylmethacrylat) bei somit gleicher Rezeptur die Teilchen größer werden. Eine andere Möglichkeit der Teilchengrößensteuerung ergibt sich über den Feststoffgehalt und die Initiatorkonzentration. Sowohl die Erhöhung der Initiatorkonzentration als auch die Erhöhung des Feststoffgehalts führt zu großen Teilchen. Dies kann im Vergleich Beispiel 3 → Beispiel 1 gesehen werden. Kleine Anteile an Allylmethacrylat haben keinen deutlichen Einfluß auf die Teilchengröße.

**TABELLE 2**

| | | | | | |
|---|---|---|---|---|---|
| Dispersion aus Methylmethacrylat-Isobutylmethacrylat-Copolymerisat (90 : 10 Gew.-Teile) mit Bis(4-tert.-Butylcyclohexyl)peroxydicarbonat als Initiator, Feststoffgehalt: 30 %. | | | | | |

| *Beisp.* | **Initiator (%)* | **Styrol-Isopren Blockcopolymerisat, hydriert (%)* | *Cyclohexan (%)* | *Butylacetat (%)* | *Teilchengröße (µm)* |
|---|---|---|---|---|---|
| *9* | *0,25* | *0,63* | *96,4* | *3,6* | *4,8* |
| *10* | *0,25* | *0,63* | *92,9* | *7,1* | *6,2* |
| *11* | *0,25* | *0,63* | *91,4* | *8,6* | *6,7* |
| *12* | *0,25* | *0,63* | *89,3* | *10,7* | *6 - 10*** |

| | | | | | |
|---|---|---|---|---|---|
| * *Gew.-*% *bezogen auf Monomere* | | | | | |
| ** *multimodal* | | | | | |

### Beispiel 13

Herstellung von vernetzten Teilchen mit rauher Oberfläche der Zusammensetzung Methylmethacrylat, Phenylmethacrylat, Allylmethacrylat.

In einem 500 ml Reaktor mit Rührer, Kühler, Stickstoff-Einleitung, Temperaturfühler werden
- 199 g: Cyclohexan
- 68,6 g: Methylmethacrylat
- 29,4 g: Phenylmethacrylat
- 1 g: Allylmethacrylat
- 0,62 g: Shellvis® 50
auf 70 Grad C erwärmt. Der Reaktorinhalt wird mit 68 Umdrehungen/Minute gerührt. Zum Start der Reaktion wird 1 g Bis(4-tert.-Butylcyclohexyl)peroxodicarbonat als 10 %ige Lösung in Cyclohexan zugesetzt. Nach ca. 2 Minuten erkennt man eine leichte Trübung, nach 10 Minuten ist der Reaktionsansatz weiß. Die Innentemperatur wird < 74 Grad C gehalten, nach 75 min ist die Reaktion beendet, zur Nachreaktion werden 0,1 g t.-Butyl-per-2-Ethylhexanoat zugesetzt und 2 1/2 Stunden bei 75 Grad C gerührt. Danach wird gekühlt. Die Dispersion ist koagulatfrei. Die Teilchen sind 8 µm groß und besitzen eine rauhe Oberfläche.

### Beispiel 14

Herstellung von vernetzten Teilchen mit rauher Oberfläche der Zusammensetzung MMA, Benzylmethacrylat,
Allylmethacrylat.

In einem Reaktor - wie in Beispiel 13 beschrieben - werden
- 136,5 g: Cyclohexan
- 34,5 g: Methylmethacrylat
- 25,1 g: Benzylmethacrylat
- 3,1 g: Allylmethacrylat
- 0,8 g: Shellvis® 50
vorgelegt und auf 71 Grad C erwärmt. Durch Zugabe einer Lösung von 0,63 g Bis(4-tert.-Butylcyclohexyl)peroxodicarbonat und 0,06 g t-Butyl-per-2-ethylhexanoat in 6,2 g Cyclohexan wird die Polymerisation gestartet. Nach 75 Minuten wird die Innentemperatur auf 75 Grad C erhöht und 2 Stunden bei dieser Temperatur gerührt. Man erhält eine koagulatfreie Dispersion. Die Dispersion enthält < 2 Gew.-% sehr feine Teilchen (< 1 µm), mehr als 98 Gew.-% der Teilchen haben eine Größe von 9 µm. Die 9 µm großen Teilchen sind rauh und eckig. Die Teilchen werden abfiltriert und im Vakuum getrocknet.

### Beispiel 15

Man wiederholt den Ansatz gemäß Beispiel 14, wählt jedoch folgende Änderungen: Start mit 0,63 g Bis(4-tert.-Butylcyclohexyl)peroxidicarbonat in 5,67 g Cyclohexan gelöst, Nachreaktion durch Zugabe von 0,06 g t-Butylperneodecanoat in 0,54 g Cyclohexan. Es wird noch eine weitere Stunde bei 75 Grad C gerührt, danach wird gekühlt und abfiltriert. Man erhält Perlpolymerisate mit einer Teilchengröße von 8,3 µm, die Teilchen sind rauh und eckig. Die Teilchen werden im Vakuum getrocknet.

### Beispiel 16

### Einarbeitung der monodispersen Teilchen in PMMA-Formmasse

6 Teile monodisperse Perlpolymerisate gemäß Beispiel 15 werden mit 94 Teilen PMMA-Granulat (PLEXIGLAS ® 8N) gemischt und anschließend auf einem Entgasungsextruder bei 230 Grad C in der Schmelze homogen verteilt. Die austretenden Schmelzestränge werden granuliert.

### Beispiel 17

Aus dem Granulat gemäß Beispiel 16 werden im Spritzgußverfahren Skalenabdeckungen gespritzt. Die so hergestellten Skalenteile zeigen hohe Transparenz bei optimaler Streuung.
Probendicke: 2 mm
Energiehalbwertswinkel γ/2 = 15 Grad
Transmissionsgrad T = 90 %

### Beispiel 18

Einarbeitung der monodispersen Teilchen in schlagzähe PMMA Formmassen

6 Teile monodisperse Perlpolymerisate gemäß Beispiel 15 werden mit 94 Teilen PLEXIGLAS ® zK6A gemischt und granuliert.

### Beispiel 19

Das Granulat gemäß Beispiel 18 wird im Coextrusionsverfahren in einer Schichtdicke von 100 µm auf 3 mm ABS als Träger aufgebracht. Der Coextrusionsverbund zeichnet sich durch eine seidenmatte Struktur aus.

Rauhigkeit (gemessen mit dem Perth-O-meter):
- RA:: 0,38
- RZ:: 2,60
- Rₘₐₓ:: 3,02

## Patentansprüche

1. Verfahren zur Herstellung monodisperser Poly(meth)acrylatteilchen nach dem Verfahren der Fällungspolymerisation,
dadurch gekennzeichnet,
daß man die Monomeren M, enthaltend zu mindestens 60 Gew.-% Monomere der Formel I 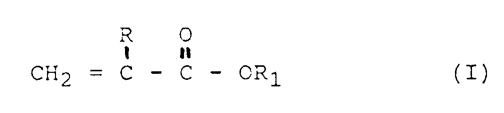 worin R Wasserstoff oder Methyl und R₁ einen Alkylrest mit 1 bis 8 Kohlenstoffatomen, einen gegebenenfalls substituierten Arylrest oder einen Aralkylrest mit 6 bis 24 C-Atomen bedeutet, in einem halogenfreien Lösungsmittel L, das zu mindestens 70 und bis 100 Gew.-% aus Cyclohexan besteht in Gegenwart eines Blockcopolymeren mit Polystyrolanteilen BCP in Anteilen von 0,1 bis 10 Gew.-% bezogen auf die Monomeren und in Anwesenheit eines Perkohlensäureesters als Initiator in Anteilen von 0,02 bis 2 Gew.-% bezogen auf die Monomeren polymerisiert.

2. Verfahren gemäß Anspruch 1, dadurch gekennzeichnet, daß die monodispersen Poly(meth)acrylatteilchen Durchmesser im Bereich 2 - 20 µm besitzen.

3. Verfahren gemäß Anspruch 1, dadurch gekennzeichnet, daß die Monomeren M zu mindestens 20 Gew.-% aus Methylmethacrylat bestehen.

4. Verfahren gemäß den Ansprüchen 1 und 2, dadurch gekennzeichnet, daß die Blockcopolymeren mit Polystyrolanteilen ausgewählt sind aus der Gruppe, enthaltend Ethylen-co-propylen- oder Ethylen-co-butylen-blöcke neben Polystyrolblöcken.

5. Verfahren gemäß den Ansprüchen 1 - 4, dadurch gekennzeichnet, daß man 0,1 - 20 Gew.-% bezogen auf die Monomeren an Pfropfvernetzern copolymerisiert.

6. Verfahren gemäß den Ansprüchen 1 - 5, dadurch gekennzeichnet, daß man Aryl- oder Aralkylmethacrylate mit 6 - 14 Kohlenstoffatomen im Esterteil in Anteilen von 1 - 80 Gew.-% bezogen auf die Monomeren copolymerisiert.

7. Poly(meth)acrylate aufgebaut aus den Monomeren Methylmethacrylat, Phenylmethacrylat und einem Pfropfvernetzer in Form von monodispersen Teilchen, dadurch gekennzeichnet, daß die Teilchendurchmesser im Bereich 4 - 12 µm liegen.

8. Poly(meth)acrylate aufgebaut aus den Monomeren Methylmethacrylat, Aralkylmethacrylat aus der Gruppe Benzylmethacrylat, Phenylethylmethacrylat, Phenylpropylmethacrylat und einem Pfropfvernetzer in Form von monodispersen Teilchen, dadurch gekennzeichnet, daß die Teilchendurchmesser im Bereich 4 - 12 µm liegen.

9. Polymethacrylate gemäß Anspruch 8, dadurch gekennzeichnet, daß die Polymethacrylate aufgebaut sind aus den Monomeren Methylmethacrylat, Benzylmethacrylat und Allylmethacrylat.

10. Polymethacrylate gemäß den Ansprüchen 7 - 9, dadurch gekennzeichnet, daß die Polymethacrylate in Form von monodispersen Teilchen in einem Teilchengrößenbereich von 5 - 11 µm vorliegen und eine rauhe Oberfläche aufweisen.

11. Polymethacrylate aufgebaut aus den Monomeren Methylmethacrylat, Benzylmethacrylat und Allylmethacrylat in Form von monodispersen Teilchen, dadurch gekennzeichnet, daß die Teilchen eine rauhe Oberfläche haben und einen Durchmesser im Bereich 7,5 ± 2 µm aufweisen.

12. Formmasse enthaltend 0,01 - 60 Gew.-% an monodispersen Teilchen gemäß den Ansprüchen 7 - 11.

13. Formmasse auf Basis von gegebenenfalls schlagzähmodifizierten PMMA, MMA-Copolymeren, Polycarbonat, PMMI, Polystyrol, SAN und PVC enthaltend 0,1 - 25 Gew.-% an monodispersen Teilchen gemäß den Ansprüchen 7 - 11.

14. Lacke enthaltend 0,01 - 30 Gew.-% an monodispersen Teilchen gemäß den Beispielen 7 - 11.

15. Kunststoffhalbzeuge auf Basis PMMA; PMMA-Copolymere, Polycarbonat, PMMI, Polystyrol, Styrolcopolymeren und PVC enthaltend 0,01 - 60 Gew.-% der Teilchen gemäß den Ansprüchen 7 - 11.

## Claims

1. A process for preparing monodisperse poly(meth)acrylate particles using the method of precipitation polymerisation, characterised in that the monomers M, comprising at least 60 wt.% of monomers of formula of formula I 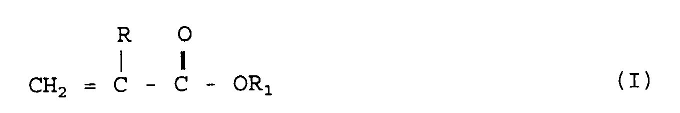 wherein R is hydrogen or methyl and R₁ is an alkyl group having 1 to 8 carbon atoms, an optionally substituted aryl group or an aralkyl group having 6 to 24 carbon atoms, are polymerised in a halogen-free solvent L comprising at least 70 and up to 100 wt.% of cyclohexane, in the presence of a block copolymer with polystyrene content BCP in an amount of 0.1 to 10 wt.% based on the monomers, and in the presence of a percarbonic acid ester as initiator in an amount of 0.02 to 2 wt.% based on the monomers.

2. A process according to claim 1, characterised in that the monodisperse poly(meth)acrylate particles have a diameter within the range of 2 to 20 µm.

3. A process according to claim 1, characterised in that the monomers M comprise at least 20 wt.% of methyl methacrylate.

4. A process according to claims 1 and 2, characterised in that the block copolymers with a polystyrene content are selected from the group comprising ethylene-co-propylene or ethylene-co-butylene blocks, in addition to polystyrene blocks.

5. A process according to claim 1 to 4, characterised in that graft crosslinking agents are copolymerised, in an amount of 0.1 to 20 wt.% based on the monomers.

6. A process according to claims 1 to 5, characterised in that aryl or aralkylmethacrylates having 6 to 14 carbon atoms in the ester group are copolymerised in an amount of 1 to 80 wt.% based on the monomers.

7. Poly(meth)acrylates comprising the monomers methyl methacrylate, phenyl methacrylate and a crosslinking agent in the form of monodisperse particles, characterised in that the particle diameters are in the range of from 4 to 12 µm.

8. Poly(meth)acrylates comprising the monomers methyl methacrylate, aralkyl methacrylate from the group benzyl methacrylate, phenylethyl methacrylate, phenylpropyl methacrylate and a crosslinking agent in the form of monodisperse particles, characterised in that the particle diameter is within the range of from 4 to 12 µm.

9. Polymethacrylates according to claim 8, characterised in that the polymethacrylates comprise the monomers methyl methacrylate, benzyl methacrylate and allyl methacrylate.

10. Polymethacrylates according to claims 7 to 9, characterised in that the polymethacrylates are in the form of monodisperse particles in a particle size range of from 5 to 11 µm and have a rough surface.

11. Polymethacrylates comprising the monomers methyl methacrylate, benzyl methacrylate and allyl methacrylate in the form of monodisperse particles, characterised in that the particles have a rough surface and a diameter in the range of 7.5 ± 2 µm.

12. A moulding compound comprising 0.01 to 60 wt.% of monodisperse particles according to claims 7 to 11.

13. A moulding compound based on optionally impact resistance-modified PMMA, MMA copolymers, polycarbonate, PMMI, polystyrene, SAN and PVC comprising 0.1 to 25 wt.% of monodisperse particles according to claims 7 to 11.

14. Varnishes comprising 0.01 to 30 wt.% of monodisperse particles according to claims 7 to 11.

15. Semi-finished products made of plastic material based on PMMA; PMMA copolymers, polycarbonate, PMMI, polystyrene, styrene copolymers and PVC comprising 0.01 to 60 wt.% of particles according to claims 7 to 11.

## Revendications

1. Procédé de préparation de particules monodispersées de poly(méth)acrylate suivant la technique de la polymérisation de précipitation,
caractérisé en ce que l'on polymérise les monomères M, contenant à raison de 60% en poids au moins des monomères de formule I 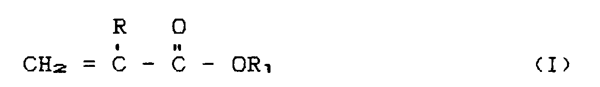 dans laquelle R représente un atome d'hydrogène ou un reste méthyle et R₁ représente un reste alkyle à 1-8 atomes de carbone, un reste aryle éventuellement substitué ou un reste aralkyle à 6-24 atomes de carbone, dans un solvant L dépourvu d'halogène qui se compose de cyclohexane pour 70% en poids au moins et jusqu'à 100% en poids, en présence d'un copolymère séquencé BCP contenant des blocs de polystyrène, dans des proportions de 0,1 à 10% en poids par rapport aux monomères, et en présence d'un ester d'acide percarbonique servant d'amorceur dans des proportions de 0,02 à 2% en poids par rapport aux monomères.

2. Procédé selon la revendication 1, caractérisé en ce que les particules monodispersées de poly(méth)acrylate ont un diamètre compris entre 2 et 20 µm.

3. Procédé selon la revendication 1, caractérisé en ce que les monomères M se composent, pour 20% en poids au moins, de méthacrylate de méthyle.

4. Procédé selon la revendication 1 ou 2, caractérisé en ce que les copolymères séquencés contenant des blocs de polystyrène sont choisis dans le groupe des copolymères contenant, en plus de blocs de polystyrène, des blocs d'éthylène-co-propylène ou d'éthylène-co-butylène.

5. Procédé selon l'une quelconque des revendications 1 à 4, caractérisé en ce que l'on copolymérise 0,1 à 20% en poids de réticulants de greffage par rapport aux monomères.

6. Procédé selon l'une quelconque des revendications 1 à 5, caractérisé en ce que l'on copolymérise des méthacrylates d'aryle ou d'aralkyle à 6-14 atomes de carbone dans la partie ester, dans des proportions de 1 à 80% en poids par rapport aux monomères.

7. Poly(méth)acrylates sous forme de particules monodispersées, se composant des monomères méthacrylate de méthyle, méthacrylate de phényle et d'un réticulant de greffage, caractérisés en ce que les diamètres des particules se situent dans la gamme de 4 à 12 µm.

8. Poly(méth)acrylates sous forme de particules monodispersées, se composant des monomères méthacrylate de méthyle, méthacrylate d'aralkyle du groupe du méthacrylate de benzyle, du méthacrylate de phényléthyle et du méthacrylate de phénylpropyle, et d'un réticulant de greffage, caractérisés en ce que les diamètres des particules se situent dans la gamme de 4 à 12 µm.

9. Polyméthacrylates selon la revendication 8, caractérisés en ce qu'ils se composent des monomères méthacrylate de méthyle, méthacrylate de benzyle et méthacrylate d'allyle.

10. Polyméthacrylates selon l'une quelconque des revendications 7 à 9, caractérisés en ce qu'ils se présentent sous forme de particules monodispersées dans la gamme de grosseurs de particules de 5 à 11 µm et qu'ils présentent une surface rugueuse.

11. Polyméthacrylates sous forme de particules monodispersées, se composant des monomères méthacrylate de méthyle, méthacrylate de benzyle et méthacrylate d'allyle, caractérisés en ce que les particules ont une surface rugueuse et présentent un diamètre dans la gamme de 7,5 ± 2 µm.

12. Masse à mouler, contenant 0,01 à 60°% en poids de particules monodispersées selon l'une quelconque des revendications 7 à 11.

13. Masse à mouler à base de PMMA, de copolymères de MMA, de polycarbonate, de PMMI, de polystyrène, de SAN et de PVC, éventuellement modifiés dans le sens de la résilience, contenant 0,01 à 25% en poids de particules monodispersées selon l'une quelconque des revendications 7 à 11.

14. Laques contenant 0,01 à 30% en poids de particules monodispersées selon l'une quelconque des revendications 7 à 11.

15. Produits semi-finis en matière plastique à base de PMMA, de copolymères de MMA, de polycarbonate, de PMMI, de polystyrène, de copolymères du styrène et de PVC, contenant 0,01 à 60% en poids des particules selon l'une quelconque des revendications 7 à 11.
